# EUROPÄISCHE PATENTSCHRIFT

(11) **EP 2 695 263 B1**
(45) Veröffentlichungstag und Bekanntmachung des Hinweises auf die Patenterteilung: **21.02.2018**
(21) Anmeldenummer: 12720786.8
(22) Anmeldetag: 03.04.2012
(51) Int. Cl.: H02G 15/04

(54) **KABELABSCHLUSSEINRICHTUNG**
CABLE-TERMINATION DEVICE
DISPOSITIF DE TERMINAISON DE CÂBLE

(30) Priorität: 08.04.2011 DE 102011016459
(43) Veröffentlichungstag der Anmeldung: 12.02.2014
(73) Patentinhaber: Phoenix Contact GmbH & Co. KG, 32825 Blomberg (DE)
(72) Erfinder: FRANKE, Jens, 31812 Bad Pyrmont (DE); FELDNER, Ralf, 32760 Detmold (DE); TÜNKER, Manuel, 32694 Dörentrup (DE); STARKE, Cord, 32825 Blomberg (DE)
(74) Vertreter: Bringemeier, Ulrich Heinz
(86) Internationale Anmeldenummer: PCT/EP2012/001505
(87) Internationale Veröffentlichungsnummer: WO 2012/136367

(56) Entgegenhaltungen:
- DE-C- 850 906
- DE-U1- 29 919 708
- GB-A- 2 470 584
- US-A- 1 626 875
- US-A- 2 416 943
- US-A- 3 395 382
- Energy Enphase: "Installation Manual Enphase Engage Cable and Accessories", , 1 January 2011 (2011-01-01), pages 1-26, XP055331674, Petaluma, CA Retrieved from the Internet: URL:https://estg-zonnepanelen.nl/media/wys iwyg/Engage_InstallationOperation_Manual.p df [retrieved on 2017-01-02]

## Beschreibung

Die vorliegende Erfindung betrifft eine Kabelabschlusseinrichtung, welche dafür vorgesehen und geeignet ist, wenigstens ein Kabelende berührsicher zu terminieren.

Die US 1,626,875 A offenbart einen elektrischen Verbinder, mit dem mehrere Kabelenden sicher miteinander verbunden werden können. Der elektrische Verbinder weist eine Gewindekappe auf, die auf eine Hülse aufgeschraubt wird. Im Inneren der Hülse werden die freigelegten Kabelenden an Klemmmitteln miteinander elektrisch leitend verbunden.

Mit der US 2,416,943 A ist ein Gehäuse zur Verbindung von leitenden Kabelenden bekannt geworden. Das Gehäuse umfasst eine mit einem Gewinde versehene Kappe, die auf eine Hülse aufgeschraubt wird. Die freien Kabelenden werden von einer leitenden Innenverkleidung umgeben, um eine elektrisch leitende Verbindung unter allen Kabelenden zu gewährleisten.

Die DE 299 19 708 U1 zeigt eine Kabelanschluss- oder Kabelverbindungseinrichtung mit einem Außensechskant zum elektrisch leitenden Anschluss eines mehradrigen Kabels an ein elektrisches Gerät. Eine Sicherungslasche oder eine Rastverbindung können zur Sicherung vorgesehen sein.

Die US 3,395,382 A zeigt eine wieder zu öffnende elektrische Anordnung, bei der mehrere Leiter in einem verschraubbaren Gehäuse aufgenommen werden können.

Aus der GB 2 470 584 A ist eine Endeinheit für faseroptische und andere Netzwerkkabel bekannt geworden, worin der Netzwerkstecker bei Nichtbenutzung geschützt aufgenommen werden kann. Aus der DE 850 906 ist eine Kabelabschlusseinrichtung nach dem Oberbegriff des Anspruchs 1 bekannt. Ein vor Umwelteinflüssen wie Staub und Wasser abgedichtetes Kabelende wird beispielsweise bei der Montage von Fotovoltaikanlagen häufig benötigt. Solche Kabelabschlusseinrichtungen sollten regelmäßig wenigstens die Schutzklasse IP 67 gemäß DIN EN 60529 bzw. DIN 40050 Teil 9 aufweisen. Das bedeutet, dass die Kabelabschlusseinrichtung staubdicht ausgeführt ist und wenigstens Schutz gegen zeitweiliges Untertauchen der Kabelabschlusseinrichtung in Wasser bietet, da solche Gegebenheiten bei den frei verlegten Kabeln beispielsweise bei der Verwendung in Fotovoltaikanlagen auftreten können. Außer bei dem Einsatz an Fotovoltaikanlagen ist die Verwendung der erfindungsgemäßen Kabelabschlusseinrichtung aber auch an sonstigen elektrischen oder elektronischen Bauteilen möglich.

Zur Vereinfachung der Montage von Fotovoltaikanlagen können die leistungsführenden Kabel in regelmäßigen Abständen z. B. mit T-Stücken direkt auf der Rolle hergestellt werden, um die Konfektionierung und das Anschließen der Solarmodule später zu erleichtern. Dann weist beispielsweise ein solches Kabel in vorbestimmten Abständen von z.B. 1 m oder dergleichen T-Stücke zum Anschluss von Solarmodulen auf. Für die Montage von Solarmodulen wird es dann nur erforderlich, die gewünschte Länge Solarkabel von der Rolle abzurollen und nach der gewünschten Länge abzuschneiden. Bei der anschließenden Montage können an den schon vorhandenen T-Stücken die Solarmodule seitlich angeschlossen werden.

Wichtig ist es jedoch, dass das abgeschnittene freie Ende des Solarkabels zuverlässig terminiert wird. Aufgrund der bei Fotovoltaikanlagen möglichen hohen Stromstärken und Spannungen ist es wichtig, die stromführenden Kabel berührsicher und dauerhaft zuverlässig zu terminieren.

Da mit der zunehmenden Montage von Fotovoltaikanlagen auf den Dächern von Privatleuten auch zunehmend unerfahrene Personen Zugang zu solchen elektrischen Anlagen haben, ist es wichtig, solche Solarkabel so zu terminieren, dass die Bewohner oder Eigentümer eines mit einer Fotovoltaikanlage ausgerüsteten Hauses einer möglichst geringen Gefährdung ausgesetzt werden.

Die unveröffentlichte DE 10 2010 047 217.4-34 offenbart eine Kabelabschlusseinrichtung zur einfachen Terminierung von Kabelenden, wobei die Kabelabschlusseinrichtung nach erfolgter Montage von Hand nicht mehr geöffnet werden kann.

Es ist die Aufgabe der vorliegenden Erfindung, eine weitere Kabelabschlusseinrichtung zur Verfügung zu stellen, welche einfach zu montieren ist und welche einen zuverlässigen Berührschutz bietet.

Diese Aufgabe wird gelöst durch eine Kabelabschlusseinrichtung mit den Merkmalen des Anspruchs 1. Bevorzugte Weiterbildungen der Erfindung sind Gegenstand der Unteransprüche. Weitere Vorteile und Merkmale der Erfindung ergeben sich aus den Ausführungsbeispielen.

Die erfindungsgemäße Kabelabschlusseinrichtung weist ein Gehäuse mit wenigstens einer Einführöffnung für ein Kabel auf, um das Kabelende berührsicher zu terminieren.

Das Gehäuse weist eine Abschlusskappe und eine damit verschraubbare Schraubeinheit auf. An der Schraubeinheit ist die Einführöffnung zur Aufnahme wenigstens eines Kabelendes vorgesehen. Die Abschlusskappe ist an dem äußeren Ende ballig ausgestaltet. Wenigstens eine Rasteinrichtung ist zur Verrastung des Gehäuses vorgesehen. Insbesondere dient die Rasteinrichtung zur Verrastung der Schraubeinheit und der Abschlusskappe.

Die erfindungsgemäße Kabelabschlusseinrichtung hat viele Vorteile, da sie eine einfache Montage und ein hohes Maß an Sicherheit bietet. Durch die Rasteinrichtung ist eine Demontage von Hand nicht ohne weiteres Werkzeug möglich. Eine Hand findet ohne Einsatz von Werkzeug keinen ausreichenden Halt zur Demontage. Damit bietet die erfindungsgemäße Kabelabschlusseinrichtung auf einfache Art und Weise ein hohes Maß an Sicherheit, insbesondere bei der Verwendung an Solarkabeln für Fotovoltaikanlagen. Unbedarfte Personen, die eine solche Kabelabschlusseinrichtung in die Hand bekommen, können die Kabelabschlusseinrichtung nicht ohne spezielles Werkzeug öffnen. In der erfindungsgemäßen Kabelanschlusseinrichtung umfasst die Rasteinrichtung wenigstens eine Rastverzahnung und wenigstens ein damit zusammenwirkendes Rastelement. Der Einsatz einer Rasteinrichtung mit einer Rastverzahnung und wenigstens einem damit zusammenwirkenden Rastelement ermöglicht eine zuverlässige Verrastung der Kabelabschlusseinrichtung. Bevorzugterweise ist die Rastverzahnung als Axialverzahnung ausgebildet und wirkt mit einem entsprechenden axial wirkenden Rastelement zusammen.

Besonders bevorzugt ist eine radial wirkende Rastverzahnung vorgesehen, die radial an dem Gehäuse angeordnet ist. Vorzugsweise ist dann wenigstens ein insbesondere elastisch wirkendes Rastelement an der Abschlusskappe vorgesehen. In allen Fällen ist es besonders bevorzugt, dass eine Mehrzahl an Rastelementen vorgesehen ist, die insbesondere symmetrisch über den Umfang verteilt angeordnet sind.

In vorteilhaften Ausgestaltungen umfasst die Rateinrichtung wenigstens eine Schrägverzahnung. Die Schrägverzahnung weist Zähne auf, bei denen die eine Flanke erheblich flacher ausgebildet ist, als die andere Flanke. Möglich ist es auch, dass eine Flanke flach ausgebildet ist, und dass die andere Flanke senkrecht unter einem Winkel von z.B. 90° ausgerichtet ist. Möglich ist auch ein Steigungswinkel der Flanke größer als 90°, sodass sich an dieser Zahnflanke ein Überstand oder Hinterschnitt ergibt. Solche Ausgestaltungen ermöglichen eine besonders schwierig zu lösende Verbindung.

Grundsätzlich sind Ratseinrichtungen mit Rastverzahnungen, bei denen eine besonders steile Zahnflanke zur Verrastung vorliegt, nur durch Einsatz großer Kraft zu lösen. Besonders bevorzugt wird hier eine derartig große Kraft gewählt, dass ohne Einsatz von Werkzeug ein Lösen der Verbindung nur über eine Zerstörung der Rasteinrichtung und somit der Abschlusseinrichtung insgesamt möglich ist.

In besonders bevorzugten Ausgestaltungen steht die Schrägverzahnung während des Aufschraubens mit dem Rastelement wenigstens zeitweise oder/und wenigstens abschnittsweise in Eingriff. Dabei steigen die Zähne der Schrägverzahnung in Aufschraubrichtung flacher an als in entgegen gesetzter Richtung. Dadurch wird ein einfaches Verschrauben der Abschlusskappe mit dem Gehäuse möglich.

Das Rastelement und/oder die Zähne der Schrägverzahnung geben bei der Verschraubung elastisch nach. Nach erfolgtem Ein- bzw. Aufschrauben der Anschlusskappe führt der steilere Verlauf der Zähne der Schrägverzahnung auf der anderen Seite dazu, dass ein Aufschrauben nur mit sehr großem Krafteinssatz möglich ist, welches in der Regel zu einer Zerstörung des Bauteils führt.

In bevorzugten Ausgestaltungen ist die Rastverzahnung radial außen an dem Gehäuse angeordnet. Möglich ist es aber auch, dass die Rastverzahnung radial innen an einer umlaufenden Kontur oder an einem umlaufenden Absatz vorgesehen ist. Das wenigstens eine Rastelement ist dementsprechend entweder radial außen oder radial innen vorgesehen, um den Eingriff mit der Rastverzahnung zu gewährleisten.

Wenn die Abschlusskappe zum äußersten Ende hin abgerundet ausgebildet ist, wird durch die Formgebung der Abschlusskappe ein noch zuverlässiger und dauerhafterer Schutz vor einem zufälligen oder unbeabsichtigten Öffnen der Kabelabschlusseinrichtung erlaubt, selbst wenn die typischerweise aus Kunststoff bestehenden Gehäuseteile wie Abschlusskappe und Schraubeinheit Setzungserscheinungen unterliegen sollten.

Es sind im Stand der Technik Schutzvorrichtungen für Kabelenden wie z. B. Verteilerdosen bekannt geworden. Dabei werden einzelne Eingänge durch Dichtstopfen abgedichtet. Diese können aber auch ohne Werkzeug geöffnet werden, sodass sich Privatpersonen, die sich mit der Gefahr beim Öffnen von Kabelabschlusseinrichtungen von Fotovoltaikanlagen nicht auskennen, einem erheblichen Risiko aussetzen können.

Ein weiterer Nachteil ist der Kostenpunkt solcher Bauteile und der wesentlich erhöhte Montageaufwand. Hier bietet die Erfindung den Vorteil eines geringen Montageaufwandes und den weiteren Vorteil geringer Kosten sowie einen verbesserten Schutz vor Berührung.

In einer bevorzugten Weiterbildung ist an dem äußeren Ende der Abschlusskappe eine Kontereinrichtung vorgesehen, die insbesondere mit einem Werkzeug ergreifbar ist. Eine Kontereinrichtung an dem äußeren Ende der Abschlusskappe bietet den Vorteil, dass die Abschlusskappe mit einem an der Kontereinrichtung angreifenden Werkzeug gehalten werden kann, während die Schraubeinheit verschraubt wird. Nach erfolgter Verschraubung kann das Werkzeug entfernt werden, sodass ein nachfolgendes Wiederöffnen ohne Werkzeug nicht möglich ist.

Vorzugsweise umfasst die Kontereinrichtung wenigstens einen Schlitz und/oder ein Durchgangsloch, welches sich quer zur Längserstreckung eines zu terminierenden Kabels erstreckt. Durch ein Durchgangsloch kann beispielsweise ein Werkzeug wie ein Schraubendreher durchgesteckt werden und somit zur Lagefixierung verwendet werden. Die Schraubeinheit kann gegenüber der örtlich fixierten Abschlusskappe gedreht werden, um das Gehäuse der Kabelabschlusseinrichtung zu schließen und das darin aufgenommene Kabel berührsicher zu terminieren.

Die Abschlusskappe ist an dem äußeren Ende ballig ausgestaltet. Eine solche ballige Ausgestaltung bietet Vorteile, da eine Fixierung des balligen Endes der Abschlusskappe mit der Hand nur sehr schwierig möglich ist. Ein zufälliges Öffnen der Kabelabschlusseinrichtung ist somit praktisch nicht möglich.

Vorzugsweise weist die Abschlusskappe über wenigstens einen Längsabschnitt ein Außengewinde auf. Insbesondere weist die Schraubeinheit über wenigstens einen Längsbereich ein Innengewinde auf. Besonders bevorzugt wirkt das Innengewinde der Schraubeinheit mit dem Außengewinde der Abschlusskappe zusammen, um das Gehäuse der Kabelabschlusseinrichtung zu verschrauben.

Vorzugsweise ist wenigstens ein Spleißring wenigstens teilweise innerhalb der Abschlusskappe aufgenommen.

Es ist möglich, dass die Dichtkappe eine Klemmeinrichtung mit wenigstens einer Klemmkontur und/oder der Spleißring wenigstens eine Klemmnut aufweist. Besonders bevorzugt wirkt die Klemmkontur der Abschlusskappe mit der Klemmnut in dem Spleißring zusammen.

Dabei ist es besonders bevorzugt, dass zwischen der Klemmkontur und der Klemmnut wenigstens eine Ader des Kabels oder das Kabel insgesamt geklemmt aufnehmbar ist. Dadurch wird eine besonders vorteilhafte Befestigung des Kabelendes an der Kabelabschlusseinrichtung erzielt, da beim Verschrauben der Schraubeinheit mit der Abschlusskappe der dazwischen angeordnete Spleißring zusammen mit der Abschlusskappe das aufgenommene Kabelende zuverlässig verklemmt.

Besonders bevorzugt sind mehrere Klemmkonturen und mehrere Klemmnuten über den Umfang definiert verteilt angeordnet. Das ermöglicht beispielsweise, dass ein mehradriges Kabel sicher und zuverlässig geklemmt wird, wobei jede einzelne Ader des Kabels an einem Paar aus Klemmkontur und Klemmnut geklemmt wird. Besonders bevorzugt sind die Klemmkonturen sternförmig angeordnet, sodass sich die einzelnen Adern eines mehradrigen Kabels vom Zentrum aus sternförmig erstrecken. Dadurch werden besonders große Kriechstrecken zwischen den einzelnen Aderenden ermöglicht, was zusätzlich zur Sicherheit beiträgt.

Die Klemmnuten können insbesondere U-förmig oder V-förmig ausgestaltet sein und dienen zur Aufnahme der Aderenden, die dort von entsprechenden Klemmkonturen in Form von Profilen oder dergleichen geklemmt werden. Die Verteilung der Klemmkonturen und Klemmnuten kann symmetrisch über den Umfang verteilt vorgesehen sein. Es ist möglich, dass die einzelnen Klemmnuten und Klemmkonturen äquidistant zueinander vorgesehen sind. Möglich ist es sogar auch, dass einzelne Klemmkonturen in Gruppen angeordnet sind, wobei der Abstand einzelner Gruppen zueinander größer ist als der Abstand einzelner Adern in einer Gruppe.

Besonders bevorzugt ist eine andere Ausgestaltung, bei der der Spleißring wenigstens eine Klemmnut auf weist. An dieser Klemmnut wird ein Aderende des Kabels um etwa 180° umgelenkt. Dadurch wird die Ader des Kabels sehr zuverlässig geklemmt aufgenommen. Eine Umlenkung um etwa 180° ermöglicht bei dem massiv ausgebildeten Solarkabeln eine besonders starke Klemmung und einen sicheren Sitz. Ein Herausziehen des Kabels ist praktisch nicht möglich, da das Kabelende um 180° umgelenkt ist und für ein Herausziehen solche Kräfte nötig wären, die so nicht aufbringbar sind bzw. zu einer Zerstörung des Bauteils führen würden.

Ein besonderer Vorteil einer solchen insbesondere U-förmig ausgebildeten Klemmnut mit einer 180°-Umleenkung des Aderendes liegt darin, dass eine Klemmkontur in der Abschlusskappe nicht erforderlich wird.

Die Abschlusskappe umgibt die Aderenden an dem Spleißring im montierten Zustand. Bei der Montage sorgt die Abschlusskappe beim Aufschieben dafür, dass die Aderenden um etwa 180° umgelenkt werden.

Dadurch kann der Spleißring unter beliebigen Winkeln in die Abschlusskappe eingefüllt werden. Eine Anpassung des Drehwinkels ist nicht nötig. Wird hingegen eine Klemmkontur in der Abschlusskappe verwendet, kann die Abschlusskappe nur unter vorbestimmten Winkeln montiert werden, da die Lage von Klemmkontur und Klemmnut übereinstimmen muss.

In allen Ausgestaltungen ist vorzugsweise zwischen dem Spleißring und der Abschlusskappe wenigstens eine Dichteinrichtung vorgesehen. Die Dichteinrichtung kann beispielsweise wenigstens einen O-Ring umfassen oder als ein solcher ausgebildet sein.

Vorzugsweise ist radial innerhalb des Spleißrings eine Dichtungseinheit angeordnet. Insbesondere ist die Dichtungseinheit zwischen dem Kabel und der Innenkontur des Spleißrings vorgesehen.

Die Schraubeinheit kann wenigstens einen Dichtkonus aufweisen, der beim Verschrauben der Schraubeinheit mit der Abschlusskappe eine Lamellenstruktur des Spleißrings zusammendrückt, sodass die Dichtungseinheit innerhalb des Spleißrings gegen ein eingestecktes Kabelende gedrückt wird und somit das Kabelende vor Eintritt von Wasser und Staub und dergleichen schützt.

Durch den Spleißring, der das Kabel insgesamt oder dessen einzelne Adern separat klemmt, wird eine hohe Zuverlässigkeit und Sicherheit erzielt. Selbst mit großer Kraft kann ein Kabel nicht ohne Weiteres aus der Kabelabschlusseinrichtung herausgezogen werden. Außerdem ist die erfindungsgemäße Kabelabschlusseinrichtung kostengünstig und einfach zu montieren.

Zur Montage kann der Mantel des Kabels auf einem Stück entfernt werden und es werden das Schraubteil und der Spleißring auf das Kabelende aufgeschoben. Die einzelnen Adern werden in den Klemmnuten fixiert und die überstehenden Enden können einfach abgeschnitten werden. Im Anschluss daran wird die Abschlusskappe aufgeschoben und über einen Schraubendreher oder dergleichen winkelmäßig fixiert, während das Schraubteil mit der Abschlusskappe verschraubt wird. Dadurch werden die einzelnen Adern an den Klemmnuten um 180° umgelenkt und dort geklemmt, sodass ein sehr fester Sitz des Kabelendes an der Kabelanschlusseinrichtung erfolgt. Die Umlenkung um etwa 180° erlaubt einen sehr festen Sitz. Unter "etwa 180°" wird hier ein Bereich zwischen 150° und 210° und insbesondere zwischen 165° und 195°verstanden.

Nach erfolgter Montage kann der Schraubendreher entfernt werden und eine Demontage ist ohne Werkzeug nicht möglich.

Durch das sternförmige Aufspleißen und anschließende Zurückbiegen der Adern werden die offenen Aderenden soweit wie möglich auseinander gebracht, sodass ein zuverlässiger Schutz und größtmögliche Luft- und Kriechstrecken zur Verfügung gestellt werden.

Die vorliegende Erfindung ist auch auf eine Kabelabschlusseinrichtung ausgerichtet, die ein Gehäuse mit einer Einführöffnung für ein Kabel aufweist, um das Kabelende berührsicher zu terminieren. Dabei umfasst das Gehäuse eine Abschlusskappe und eine damit zusammenwirkende Schraubeinheit. An der Schraubeinheit ist die Einführöffnung zur Aufnahme wenigstens eines Kabelendes vorgesehen. Dabei wird wenigstens ein Aderende des Kabelendes um etwa 165° bis 195° und insbesondere etwa 180° umgelenkt, um einen festen Sitz zu erzielen.

Auch diese Kabelabschlusseinrichtung ha viele Vorteile, da sie den festen Sitz eines ein- oder mehradrigen Kabels erlaubt. Eine aufwendige Ausgestaltung von miteinander zusammen wirkenden Klemmnuten und Klemmkonturen ist nicht nötig. Es reicht die Umlenkung an beispielsweise einer U-förmig ausgebildeten Klemmnut, um das Aderende zuverlässig zu klemmen.

Weitere Vorteile und Merkmale der vorliegenden Erfindung ergeben sich aus der Beschreibung der Ausführungsbeispiele, welche im Folgenden mit Bezug auf die beiliegenden Figuren erläutert werden.

In den Figuren zeigen:
- Fig. 1: eine Ansicht einer erfindungsgemäßen Kabelabschlusseinrichtung;
- Fig. 2: eine Explosionsdarstellung einer Kabelabschlusseinrichtung nach Fig. 1;
- Fig. 3: eine Draufsicht auf die Abschlusskappe der Kabelabschlusseinrichtung gemäß Fig. 1;
- Fig. 4: einen Querschnitt durch Kabelabschlusseinrichtung nach Fig. 1;
- Fig. 5: die Kabelabschlusseinrichtung nach Fig. 1 bei der Montage;
- Fig. 6: die Kabelabschlusseinrichtung bei einem weiteren Montageschnitt;
- Fig. 7: eine weitere Kabelabschlusseinrichtung;
- Fig. 8: die Schraubeinheit der Kabelabschlusseinrichtung nach Fig. 7;
- Fig. 9: die Abschlusskappe nach Fig. 7 in einer perspektivischen Ansicht; und
- Fig. 10: eine Draufsicht auf die Abschlusskappe nach Fig. 9.

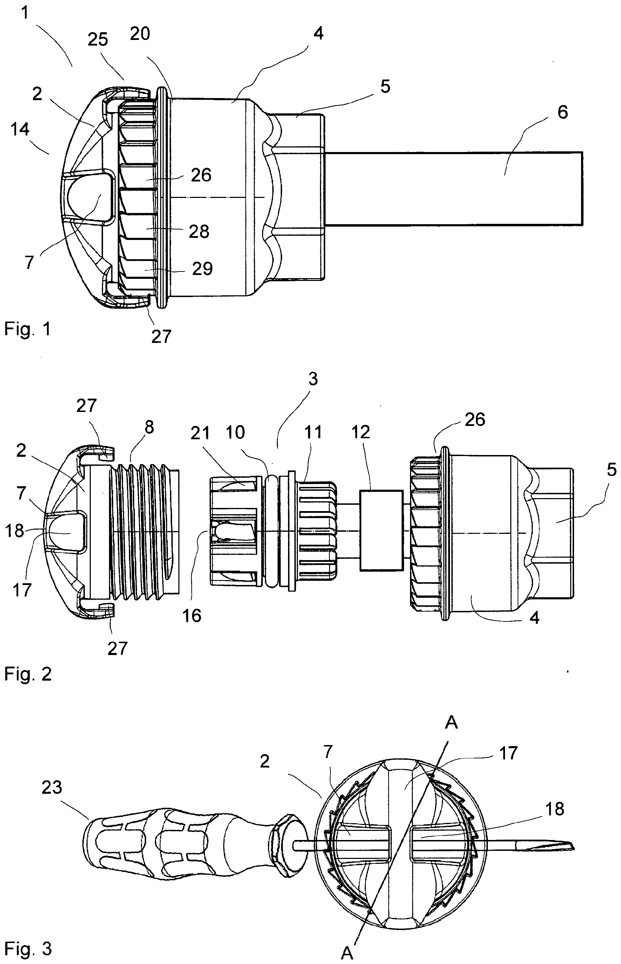

Mit Bezug auf die beiliegenden Figuren 1 bis 6 wird ein erstes Ausführungsbeispiel der Erfindung erläutert, wobei Fig. 1 eine Seitenansicht einer erfindungsgemäßen Kabelabschlusseinrichtung 1 zeigt.

Die Kabelabschlusseinrichtung 1 umfasst eine Dichtkappe 2 und eine Schraubeinheit 4, die zur Terminierung eines Kabels 6 miteinander verschraubt werden. Um den Schutz vor einem unbeabsichtigten Öffnen zu erhöhen, ist einer Rasteinrichtung 25 vorgesehen, die hier im Ausführungsbeispiel eine Rastverzahnung 26 und zwei als Rasthaken ausgebildete Rastelelemente 27 umfasst.

Die Rastverzahnung 26 ist als Schrägverzahnung 28 ausgeführt und hier im ersten Ausführungsbeispiel radial außen an der Schraubeinheit 4 vorgesehen. Die Rastverzahnung 26 wirkt mit den Rastelementen 27 zusammen, wobei die Rastelemente 27 jeweils zwischen zwei Zähnen 29 eingreifen und im verschraubten Zustand dort für eine sichere Verrastung sorgen.

Nach erfolgtem Verschrauben der Abschlusskappe 2 mit der Schraubeinheit 4 ist ein erneutes Öffnen nicht mehr möglich. Die Rasteinrichtung 25 verrastet derart, dass ein Öffnen per Hand nicht möglich ist. Falls ein Öffnen erforderlich sein sollte, kann mit Hilfe eines Werkzeugs 23 die Abschlusskappe 2 gegen die Kraft der Rasteinrichtung 25 abgeschraubt werden, wobei dies regelmäßig zu einer Zerstörung der Rasteinrichtung 25 und somit der gesamten Abschlusseinrichtung 1 führt.

Gegebenenfalls ist es unter Einsatz von Werkzeug möglich, die Rastelemente 27 von der Rastverzahnung 26 weg zu biegen und somit die Rasteinrichtung außer Eingriff zu bringen. Dann kann die Abschlusskappe 2 wieder abgeschraubt werden.

Erfindungsgemäß ist die Abschlusskappe 2 am äußeren Ende 14 ballig ausgestaltet, um der Hand noch weniger Widerstand zu bieten und ein unbeabsichtigtes Öffnen der Kabelabschlusseinrichtung noch weitgehender zu verhindern.

An der Kabelabschlusseinrichtung bzw. an dem Schraubteil bzw. der Schraubeinheit 4 sind Schlüsselflächen 5 vorgesehen, die mit einem Schraubenschlüssel, einer Zange oder einem sonstigen Werkzeug ergreifbar sind, um die Schraubeinheit 4 mit der Dichtkappe 2 zu verschrauben.

Die Schraubeinheit 4 bildet zusammen mit der Abschlusskappe 2 das Gehäuse 20, welches ein darin aufgenommenes Kabelende 13 eines Kabels 6 berührsicher aufnimmt und zuverlässig vor Berührung, Überschlag oder dergleichen schützt.

An der Abschlusskappe 2 ist eine Kontereinrichtung 7 vorgesehen, die wie in den Figuren 2 und 3 klar ersichtlich Schlitze 17 und einen Steg 18 aufweist. Die Schlitze 17 bilden ein Durchgangsloch, welches von dem Steg 18 abgedeckt wird.

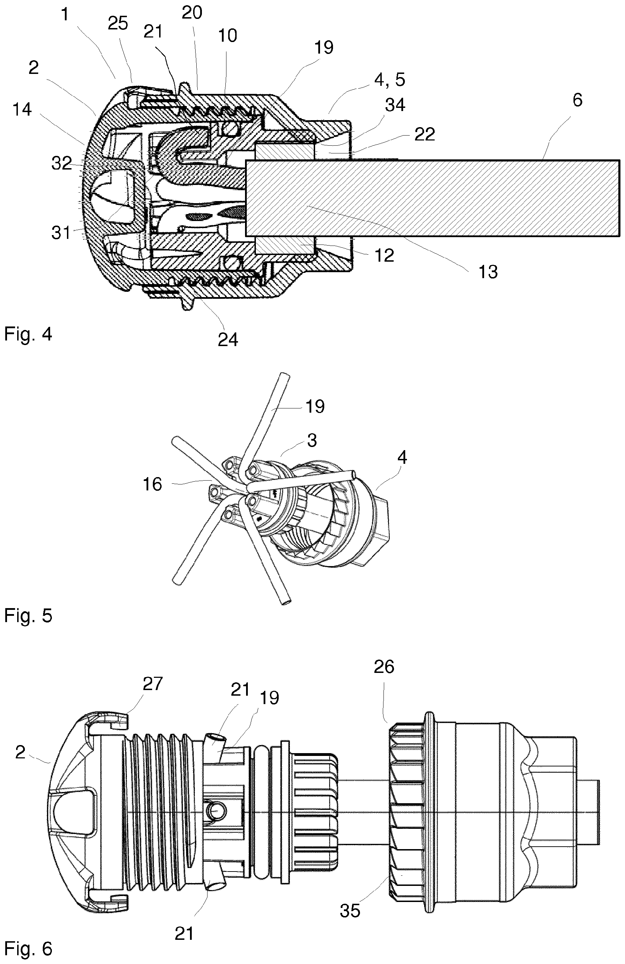

Wie in Fig. 2 dargestellt, weist die Abschlusskappe 2 ein Außengewinde 8 auf, welches dafür vorgesehen ist, mit einem Innengewinde 24 (vgl. Fig. 4) der Schraubeinheit 4 verschraubt zu werden. Dabei wird zwischen der Schraubeinheit 4 und der Abschlusskappe 2 der Spleißring 3 aufgenommen. An dem Spleißring 3 sind Klemmnutzen 16 vorgesehen, um in den Klemmnuten 16 die in Fig. 2 dargestellten Enden 21 der Einzeladern 19 des Kabels 6 klemmend aufzunehmen. Ein O-Ring 10 als Dichteinrichtung dient zur Abdichtung gegenüber der Abschlusskappe 2.

An dem der Schraubeinheit 4 zugewandten Ende des Spleißrings 3 ist eine Lamellenstruktur 11 vorgesehen, die mit der Dichtungseinheit 12 beim Verschrauben zusammenwirkt, um das Kabelende 13 des Kabels 6 dichtend an der Schraubeinheit 4 aufzunehmen. Die Dichtungseinheit 12 kann als elastischer Dichtring ausgeführt sein.

In Fig. 4 ist ein Querschnitt A-A durch die Kabelabschlusseinrichtung 1 nach Fig. 3 dargestellt. Die Aderenden 21 der Einzeladern 19 des Kabels 6 sind an den Klemmnuten 16 geklemmt . An den Klemmnuten 16 in dem Spleißring 3 sind die Aderenden 21 zuverlässig geklemmt.

Die Klemmwirkung wir durch die 180°- Umlenkung gewährleistet.

Zur Abdichtung des Kabelendes 13 gegenüber der Schraubeinheit 4 dient die Dichtungseinheit 12, die durch die zusammengedrückte Lamellenstruktur 11 auf das Kabelende 13 gedrückt wird.

Beim Verschrauben der Schraubeinheit 4 wird das Außengewinde 8 der Abschlusskappe 2 in das Innengewinde 24 der Schraubeinheit 4 eingeschraubt. Vor dem Verschrauben wird das Kabelende 13 in die Einführöffnung 22 eingeschoben.

Fig. 3 zeigt die Kabelabschlusseinrichtung 1 bei der Montage, wobei durch die Kontereinrichtung 7 ein Werkzeug 23 durchgesteckt ist, damit die Schraubeinheit 4 mit der Abschlusskappe 2 verschraubt werden kann.

In den Fig. 5 und 6 sind weitere Schritte bei der Montage dargestellt. Mit Bezug auf diese Figuren wird die Montage im Folgenden erläutert. Bei der Montage wird das Kabelende 13 des Kabels 6 durch die Einführöffnung 22 einer Schraubeinheit 4 durchgeschoben. Anschließend wird das Kabelende 13 durch den Spleißring 3 durchgeführt. Die Einzeladern 19 werden freigelegt und in die Klemmnuten 16 des Spleißrings 3 umgelegt. Die überstehenden Enden der einzelnen Adern 19 werden passend abgeschnitten.

Wie in Figur 6 dargestellt, wird anschließend die Schraubeinheit 4 aufgeschoben. Im Anschluss daran wird die Anschlusskappe 2 mit ihrem Außengewinde 8 in das Innengewinde 24 (vgl. Fig. 4) eingeschraubt. Dabei wird durch den Gehäusebereich im Bereich des Gewindes 8 der Abschlusskappe 2 ein Umlenken der Aderenden 21 der Einzelader 19 bewirkt. Die bei dem Verschrauben wirkenden Kräfte sind derart groß, dass die massiven Leiter in den Aderenden 21 an den Klemmnuten 16 um 180° umgelenkt werden. Dadurch weisen die abgeschnittenen Enden zurück in Richtung auf das Schraubteil 4. Die frei gelegten leitenden Aderenden sind so weit wie möglich von dem äußeren Ende 14 entfernt.

Durch diese Umlenkung um etwa 180° wird der Abstand zu dem äußeren Ende 14 an der Abschlusskappe 2 nochmals vergrößert. Sollte die Abschlusskappe 2 aus irgendwelchen Gründen durch Gewalteinwirkung oder dergleichen beschädigt werden, so liegt auch bei geöffneter oder entfernter Abschlusskappe 2 noch ein erheblicher Abstand von dem dort dann im Schadensfalle zugänglichen Ende zu den Leitern an den Aderenden 21 vor. Dadurch kann eine Berührung durch den Finger auch im Schadensfalle weitestgehend vermieden werden.

Das Abschneiden der Aderenden 21 erfolgt dabei so, dass eine Umlenkung um 180° gewährleistet werden kann. Die Umlenkung um 180° gewährleistet darüber hinaus noch einen festen Klemmsitz an der Kabelabschlusseinrichtung. Die um 180° umgelenkte Länge kann beispielsweise 5 mm oder 100 m betragen. Insbesondere ist sie größer als das doppelte des Durchmessers des Aderendes 21.

Bei dem Verschrauben der Abschlusskappe 2 mit dem Schraubteil 4 geraten die Rastelemente 27 in Eingriff mit der hier als Schrägverzahnung 28 ausgebildeten Ratsverzahnung 26.

Die Rastelemente 27 sind derart elastisch ausgebildet, dass beim Gleiten der Rastelemente 27 über die flacheren Schrägen 35 der Zähne 29 ein elastisches Zurückweichen radial nach außen erfolgt.

Nach dem Überwinden der jeweiligen Schrägen 35 federn die Rastelemente 27 elastisch radial nach innen zurück, sodass ein Abschrauben in umgekehrter Drehrichtung praktisch nicht möglich ist.

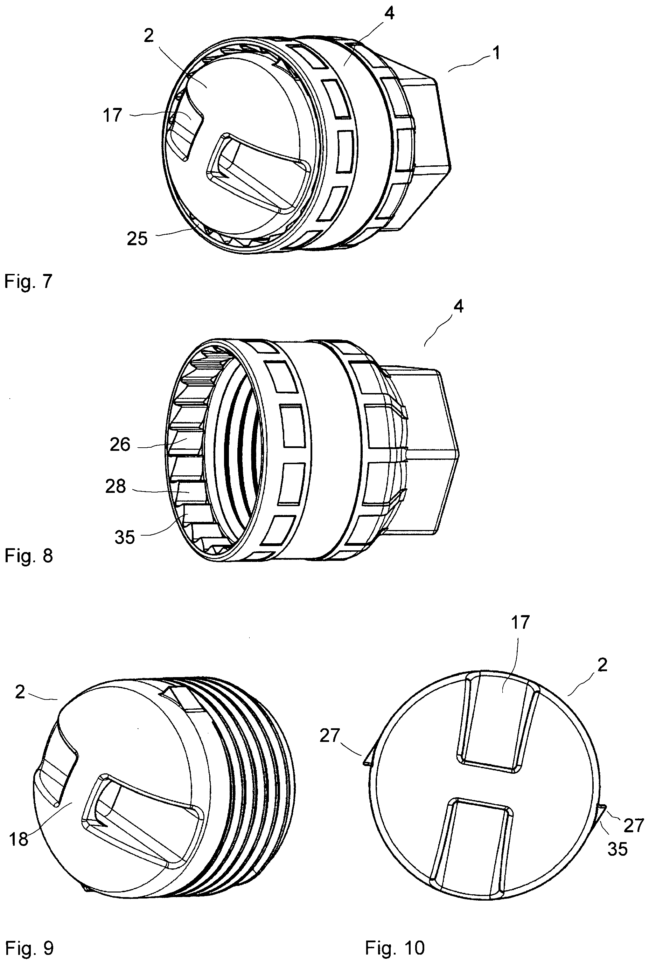

Während bei dem Ausführungsbeispiel gemäß der Figuren 1 bis 6 die Rasteinrichtung 25 mit einer radial außen vorgesehenen Rastverzahnung 26 und radial nach innen wirkenden Rastelementen 27 ausgeführt ist, wird beim Ausführungsbeispiel gemäß der Figuren 7 bis 10 die als Schrägverzahnung 28 ausgeführte Rastverzahnung 26 an einer radial inneren Kontur bzw. an einem inneren Absatz der Schraubeinheit 4 angeordnet. Die Rastelemente 27 sind radial außen an der Abschlusskappe 3 vorgesehen.

Die Abschlusskappe 2 wird zur dichten Aufnahme und Terminierung eines Kabels 6 mit der Schraubeinheit 4 verschraubt. Nach einer bestimmten Anzahl an Schraubdrehungen geraten die Rastelemente 27 in Eingriff mit der Schrägverzahnung 28. Dabei gleiten die flachen Schrägen 35 der Rastelemente 27 auf den flachen Schrägen 35 der Zähne 29, wobei sich beispielsweise die Rastelemente 27 elastisch verbiegen. Dadurch, dass die Schrägen 35 in der Verschraubungsrichtung flacher ansteigend vorgesehen sind, kann der Verschraubungsvorgang mit wenig Kraft erfolgen. Nach erfolgter Verschraubung verrasten die Rastelemente 27 fest mit der Schrägverzahnung 28, sodass ein Wiederaufschrauben per Hand nicht möglich ist.

Nur durch Einsatz eines Werkzeugs 23, wie in Figur 3 gezeigt, kann mit einer großen Kraft die Wirkung der Verrastung überwunden werden, was regelmäßig zu einer Zerstörung des Bauteils führt. Ein zerstörungsfreies Öffnen kann mit geeignetem Werkzeug auch möglich sein.

Insgesamt kann durch die Umlenkung der Aderenden 21 um etwa 180° ein hohes Maß an Berührungsschutz gewährleistet werden. Die Verrastung der Gehäusebauteile 2 und 4 miteinender führt zu einem sicheren Verschluss der Kabelabschlusseinrichtung 1.

Gleichzeitig wird eine besonders einfache Montage ermöglicht, bei der kein Spezialwerkzeug eingesetzt werden muss. Damit kann beispielsweise die Montage von Fotovoltaikanlagen auf Dächern mit geringem Aufwand erfolgen.

Die Kontereinrichtung 7 an der Abschlusskappe 2 kann grundsätzlich beliebig gestaltet sein. Beispielsweise ist es auch möglich, dass zwei beabstandete Löcher in der Abschlusskappe vorgesehen sind, in die ein Werkzeug eingeführt wird, sodass eine Fixierung der Abschlusskappe gegenüber Rotation möglich ist.

Die erfindungsgemäße Kabelabschlusseinrichtung ermöglicht eine hohe Dichtigkeit vor dem Eindringen von Wasser und Staub, da durch die Abdichtung des Spleißringes nach außen durch beispielsweise einen O-Ring ein hohes Maß an Dichtigkeit erzielbar ist. Weiterhin wird zwischen dem Kabelende 13 und dem Spleißring durch die beispielsweise gummielastische Dichteinheit ebenfalls ein hohes Maß an Dichtheit erreicht.

Die Erfindung bietet viele Vorteile, da auch ein hohes Maß an Zugfestigkeit erzielbar ist. Die Klemmung der Einzeladern zwischen dem Spleißring und der Abschlusskappe erlaubt ein hohes Maß an Zugfestigkeit. Gleichzeitig wird auf eine Befestigung der einzelnen Adern über Schrauben, Federn oder ähnliches verzichtet. Es ist möglich, einfache Kunststoffteile zu verwenden, die über standardisierte Dichtungen abgedichtet werden.

Zum erneuten Öffnen ist ein Werkzeug erforderlich, selbst wenn sich bei den verwendeten Kunststoffteilen ein gewisser Setzvorgang eingestellt haben sollte.

Durch eine sternförmige Anordnung der Einzeladern werden besonders große Luft- und Kriechstrecken zur Verfügung gestellt.

**Bezugszeichenliste**

| | |
|---|---|
| Kabelabschlusseinrichtung | 1 |
| Abschlusskappe | 2 |
| Spleißring | 3 |
| Schraubeinheit | 4 |
| Schlüsselfläche | 5 |
| Kabel | 6 |
| Kontereinrichtung | 7 |
| Außengewinde | 8 |
| Dichteinrichtung, O-Ring | 10 |
| Lamellenstruktur | 11 |
| Dichtungseinheit | 12 |
| Kabelende | 13 |
| äußeres Ende | 14 |
| Klemmnut | 16 |
| Schlitz | 17 |
| Steg | 18 |
| Einzelader | 19 |
| Gehäuse | 20 |
| Aderende | 21 |
| Einführöffnung | 22 |
| Werkzeug | 23 |
| Innengewinde | 24 |
| Rasteinrichtung | 25 |
| Rastverzahnung | 26 |
| Rastelement | 27 |
| Schrägverzahnung | 28 |
| Zahn | 29 |
| Kontur, Absatz | 30 |
| Klemmeinrichtung | 31 |
| Aufschraubrichtung | 33 |
| Dichtkonus | 34 |
| Schräge | 35 |

## Patentansprüche

1. Kabelabschlusseinrichtung (1) mit einem Gehäuse (20) und einer Einführöffnung (22) für ein Kabel (6), um das Kabelende (13) berührsicher zu terminieren,
wobei das Gehäuse (20) eine Abschlusskappe (2) und eine damit zusammenwirkende Schraubeinheit (4) umfasst, wobei an der Schraubeinheit (4) die Einführöffnung (22) zur Aufnahme wenigstens eines Kabelendes (13) vorgesehen ist, wobei eine Rasteinrichtung (25) zur Verrastung der Schraubeinheit (4) mit der Abschlusskappe (2) vorgesehen ist,
**dadurch gekennzeichnet, dass** die Rasteinrichtung (25) wenigstens eine Rastverzahnung (26) und wenigstens ein damit zusammenwirkendes Rastelement (27) umfasst.

2. Kabelabschlusseinrichtung (1) nach Anspruch 1, wobei die Rastverzahnung (26) radial an dem Gehäuse (20) vorgesehen ist und wobei wenigstens ein elastisches Rastelement (27) an der Abschlusskappe (2) vorgesehen ist.

3. Kabelabschlusseinrichtung (1) nach Anspruch 1 oder 2, wobei die Rasteinrichtung (25) wenigstens eine Schrägverzahnung (28) umfasst.

4. Kabelabschlusseinrichtung (1) nach Anspruch 3, wobei die Schrägverzahnung (28) beim Aufschrauben mit dem Rastelement (27) wenigstens abschnittsweise in Eingriff steht und wobei die Zähne (29) der Schrägverzahnung (28) in Aufschraubrichtung (33) flacher ansteigen als in entgegengesetzter Richtung.

5. Kabelabschlusseinrichtung (1) nach einem der vorhergehenden Ansprüche, wobei wenigstens eine Rastverzahnung (26) radial außen an dem Gehäuse (20) angeordnet ist.

6. Kabelabschlusseinrichtung (1) nach einem der vorhergehenden Ansprüche, wobei wenigstens eine Rastverzahnung (26) radial innen an einer umlaufenden Kontur (30) angeordnet ist.

7. Kabelabschlusseinrichtung (1) nach einem der vorhergehenden Ansprüche, wobei die Abschlusskappe (2) über wenigstens einen Längsabschnitt ein Außengewinde (8) aufweist und/oder wobei die Schraubeinheit (4) über wenigstens einen Längsbereich ein Innengewinde (24) aufweist.

8. Kabelabschlusseinrichtung (1) nach einem der vorhergehenden Ansprüche, wobei wenigstens ein Spleißring (3) wenigstens teilweise innerhalb der Abschlusskappe (2) aufgenommen ist, wobei insbesondere radial innerhalb des Spleißrings (3) eine Dichtungseinheit (12) angeordnet ist.

9. Kabelabschlusseinrichtung (1) nach Anspruch 8, wobei der Spleißring (3) wenigstens eine Klemmnut (16) aufweist, an welcher wenigstens ein Aderende (21) des Kabels (6) um etwa 180° umgelenkt ist, um das die Ader (19) des Kabels (6) geklemmt aufzunehmen.

10. Kabelabschlusseinrichtung (1) nach Anspruch 8 oder 9, wobei zwischen dem Spleißring (3) und der Abschlusskappe (2) wenigstens eine Dichteinrichtung (10) und insbesondere wenigstens ein O-Ring vorgesehen ist.

11. Kabelabschlusseinrichtung (1) nach einem der Ansprüche 8 bis 10, wobei die Schraubeinheit (4) einen Dichtkonus (34) aufweist, und wobei beim Verschrauben der Schraubeinheit (4) mit der Abschlusskappe (2) eine Lamellenstruktur (11) des Spleißrings (3) zusammengedrückt wird, sodass die Dichtungseinheit (12) gegen ein eingestecktes Kabelende (13) gedrückt wird.

12. Kabelabschlusseinrichtung (1) nach einem der Ansprüche 1 bis 11, **dadurch gekennzeichnet, dass** wenigstens ein Aderende (21) des Kabelendes (13) um etwa 180° umgelenkt wird, um einen festen Sitz zu erzielen.

## Claims

1. Cable-termination device (1) with a housing (20) and an insertion opening (22) for a cable (6), in order to terminate the cable end (13) in a manner safe to touch, wherein the housing (20) comprises a termination cap (2) and a screw unit (4) interacting therewith, wherein the insertion opening (22) for receiving at least one cable end (13) is provided on the screw unit (4), wherein a latching device (25) is provided for latching the screw unit (4) to the termination cap (2), **characterized in that** the latching device (25) comprises at least one latching toothing (26) and at least one latching element (27) interacting therewith.

2. Cable-termination device (1) according to Claim 1, wherein the latching toothing (26) is provided radially on the housing (20), and wherein at least one elastic latching element (27) is provided on the termination cap (2).

3. Cable-termination device (1) according to Claim 1 or 2, wherein the latching device (25) comprises at least one helical toothing (28).

4. Cable-termination device (1) according to Claim 3, wherein the helical toothing (28) is in engagement at least in sections with the latching element (27) during the screwing-on operation, and wherein the teeth (29) of the helical toothing (28) rise more shallowly in the screwing-on direction (33) than in the opposite direction.

5. Cable-termination device (1) according to one of the preceding claims, wherein at least one latching toothing (26) is arranged radially on the outside of the housing (20).

6. Cable-termination device (1) according to one of the preceding claims, wherein at least one latching toothing (26) is arranged radially on the inside on an encircling contour (30).

7. Cable-termination device (1) according to one of the preceding claims, wherein the termination cap (2) has an external thread (8) over at least one longitudinal portion, and/or wherein the screw unit (4) has an internal thread (24) over at least one longitudinal region.

8. Cable-termination device (1) according to one of the preceding claims, wherein at least one splice ring (3) is at least partially accommodated within the termination cap (2), wherein a sealing unit (12) is arranged in particular radially within the splice ring (3).

9. Cable-termination device (1) according to Claim 8, wherein the splice ring (3) has at least one clamping groove (16) at which at least one wire end (21) of the cable (6) is deflected by approximately 180° in order to accommodate the wires (19) of the cable (6) in a clamped manner.

10. Cable-termination device (1) according to Claim 8 or 9, wherein at least one sealing device (10) and in particular at least one O-ring are provided between the splice ring (3) and the termination cap (2).

11. Cable-termination device (1) according to one of Claims 8 to 10, wherein the screw unit (4) has a sealing cone (34), and wherein, during the screwing of the screw unit (4) to the termination cap (2), a lamellar structure (11) of the splice ring (3) is compressed such that the sealing unit (12) is pressed against an inserted cable end (13).

12. Cable-termination device (1) according to one of Claims 1 to 11, **characterized in that** at least one wire end (21) of the cable end (13) is deflected by approximately 180° in order to obtain a firm fit.

## Revendications

1. Dispositif de terminaison de câble (1) comprenant un boîtier (20) et une ouverture d'introduction (22) pour un câble (6) afin de terminer l'extrémité de câble (13) de manière à ce qu'elle soit protégée contre le contact,
le boîtier (20) comportant un capuchon de terminaison (2) et une unité à visser (4) qui coopère avec celui-ci,
l'ouverture d'introduction (22) destinée à accueillir au moins une extrémité de câble (13) se trouvant sur l'unité à visser (4), un dispositif d'encliquetage (25) destiné à l'encliquetage de l'unité à visser (4) avec le capuchon de terminaison (2) étant présent, **caractérisé en ce que** le dispositif d'encliquetage (25) comporte au moins une denture d'encliquetage (26) et au moins un élément d'encliquetage (27) qui coopère avec celle-ci.

2. Dispositif de terminaison de câble (1) selon la revendication 1, la denture d'encliquetage (26) se trouvant dans le sens radial sur le boîtier (20) et au moins un élément d'encliquetage (27) élastique étant présent sur le capuchon de terminaison (2).

3. Dispositif de terminaison de câble (1) selon la revendication 1 ou 2, le dispositif d'encliquetage (25) comportant au moins une denture hélicoïdale (28).

4. Dispositif de terminaison de câble (1) selon la revendication 3, la denture hélicoïdale (28) se trouvant en prise au moins dans certaines portions avec l'élément d'encliquetage (27) lors du vissage et les dents (29) de la denture hélicoïdale (28) s'élevant de façon plus raide dans la direction du vissage (33) que dans la direction opposée.

5. Dispositif de terminaison de câble (1) selon l'une des revendications précédentes, au moins une denture d'encliquetage (26) étant disposée dans le sens radial à l'extérieur sur le boîtier (20).

6. Dispositif de terminaison de câble (1) selon l'une des revendications précédentes, au moins une denture d'encliquetage (26) étant disposée dans le sens radial à l'intérieur sur un contour périphérique (30).

7. Dispositif de terminaison de câble (1) selon l'une des revendications précédentes, le capuchon de terminaison (2) possédant un filetage mâle (8) sur au moins une portion de longueur et/ou l'unité à visser (4) possédant un filetage femelle (24) sur au moins une zone de la longueur.

8. Dispositif de terminaison de câble (1) selon l'une des revendications précédentes, au moins une bague d'épissage (3) étant accueillie au moins partiellement à l'intérieur du capuchon de terminaison (2), une unité d'étanchéité (12) étant notamment disposée dans le sens radial à l'intérieur de la bague d'épissage (3).

9. Dispositif de terminaison de câble (1) selon la revendication 8, la bague d'épissage (3) possédant au moins une rainure de serrage (16) au niveau de laquelle au moins une extrémité de fil (21) du câble (6) est retournée d'environ 180° afin d'accueillir le fil (19) du câble (6) en le serrant.

10. Dispositif de terminaison de câble (1) selon la revendication 8 ou 9, au moins un dispositif d'étanchéité (10) et notamment un joint torique étant présent entre la bague d'épissage (3) et le capuchon de terminaison (2).

11. Dispositif de terminaison de câble (1) selon l'une des revendications 8 à 10, l'unité à visser (4) possédant un cône d'étanchéité (34) et une structure à lamelles (11) de la bague d'épissage (3) étant compressée lors du vissage de l'unité à visser (4) avec le capuchon de terminaison (2), de sorte que l'unité d'étanchéité (12) est poussée contre une extrémité de câble (13) insérée.

12. Dispositif de terminaison de câble (1) selon l'une des revendications 1 à 11, **caractérisé en ce que** l'au moins une extrémité de fil (21) de l'extrémité de câble (13) est retournée d'environ 180° afin d'obtenir une assise stable.
